# EUROPÄISCHE PATENTSCHRIFT

(11) **EP 1 864 809 B1**
(45) Veröffentlichungstag und Bekanntmachung des Hinweises auf die Patenterteilung: **24.09.2008**
(21) Anmeldenummer: 07115081.7
(22) Anmeldetag: 27.11.2003
(51) Int. Cl.: B41F 33/00

(54) **Vorrichtung zum Bedienen einer Druckmaschine**
Device for controlling a printing press
Dispositif de contrôle d'une machine à imprimer

(30) Priorität: 16.12.2002 DE 10258704; 14.04.2003 DE 10317064
(43) Veröffentlichungstag der Anmeldung: 12.12.2007
(62) Teilanmeldung aus: 03104421.7
(73) Patentinhaber: Koenig & Bauer Aktiengesellschaft, 97080 Würzburg (DE)
(72) Erfinder: Czotscher, Andreas, 97199 Ochsenfurt (DE); Geiger, Helmut, 97950 Großrinderfeld-Gerchsheim (DE); Giesel, Stefan, 97783 Karsbach (DE); Hüller, Thomas, 97753 Karlstadt (DE); Mees, Jürgen, 97273 Kürnach (DE); Rath, Armin, 97250 Erlabrunn (DE); Römling, Mirko, 97209 Veitshöchheim (DE)
(74) Vertreter: Hoffmann, Thomas

(56) Entgegenhaltungen:
- DE-A- 4 100 170

## Beschreibung

Die Erfindung betrifft eine Vorrichtung zum Bedienen einer Druckmaschine gemäß den Merkmalen des Anspruchs 1.

Durch die DE 41 00 170 ist ein Farbabstimmpult mit einem Ablagebereich bekannt, auf welchem ein mit einer Druckmaschine hergestelltes Produkt aufgelegt und seitenweise im Hinblick auf Registerhaltigkeit und/oder Farbe kontrolliert werden kann.

Die DE 37 18 594 A1 offenbart eine Einrichtung zur Steuerung einer Maschine, wobei mittels einer ersten Gruppe von Bedienelementen die Zuordnung einer zweiten Gruppe von Bedienelementen zu zu steuernden Komponenten zu treffen ist und diese Zuordnung mittels Anzeigeelementen angezeigt wird.

Die DE 32 20 622 C2 offenbart ein Bedienpult, auf welchem ein mit der Druckmaschine hergestelltes Produkt aufgelegt und auf einen Parameter hin, z.B. Farbdeckung, seitenweise vom Bedienpersonal kontrolliert werden kann. Hierzu wird über eine Auswahleinrichtung eine Farbe ausgewählt.

Aus der DE 32 20 622 C2 geht auch eine Vorrichtung zur Steuerung der Farbführung hervor, wobei ein Bildschirm ein durchsichtiges, druckempfindliches Anzeigefeld aufweist. Nach Auswahl eines Aggregates, z. B. der Registerverstellung, in einer Darstellung des Maschinenplans wird ein Bild angezeigt, das nur die Eingabe von Werten oder Befehlen an die Registerverstellung erlaubt.

Der Erfindung liegt die Aufgabe zugrunde, ein einfaches und schnelles Bedienen einer Druckmaschine zu ermöglichen.

Die Aufgabe wird erfindungsgemäß durch die Merkmale des Anspruchs 1 gelöst.

Die mit der Erfindung erzielbaren Vorteile bestehen insbesondere darin, dass es dem Bediener möglich ist, Korrekturen sicher und schnell vorzunehmen. Hierzu weist der Leitstand ein Bedienpult auf, welches es dem Bediener ermöglicht die Farben der aktuellen Seite zu erkennen und zu ändern. Die für die betreffende Druckseite relevanten Farben werden ihm durch die Anlage bzw. entsprechende Steuerung oder Planungsdaten geliefert, so dass die Gefahr eines Irrtums erheblich reduziert ist.

In vorteilhafter Ausführung des Verfahrens und der Steuerung sind Werte für die Regelung und Steuerung der Maschine über ein touchscreenfähiges Anzeigefeld am Bildschirm direkt veränder- bzw. eingebbar. Auch hierdurch wird ein einfaches und schnelles bedienen ermöglicht. Durch das Öffnen des zur Eingabefensters nur bei Bedarf ist es möglich, die am Bildschirm angezeigte Maske sehr übersichtlich zu gestalten, da nur bei Änderungswunsch das Fenster öffnet und zum anderen lediglich ein einziges Fenster vorgesehen sein muss, welches für die unterschiedlichsten Parameterfelder zu öffnen ist.

Ausführungsbeispiele der Erfindung sind in den Zeichnungen dargestellt und werden im folgenden näher beschrieben.

Es zeigen:
- Fig. 1: eine schematische Anlage mit Steuereinrichtung und Leitstand;
- Fig. 2: eine schematische Draufsicht des Bedienpultes;
- Fig. 3: eine schematische Ansicht des Bildschirms.

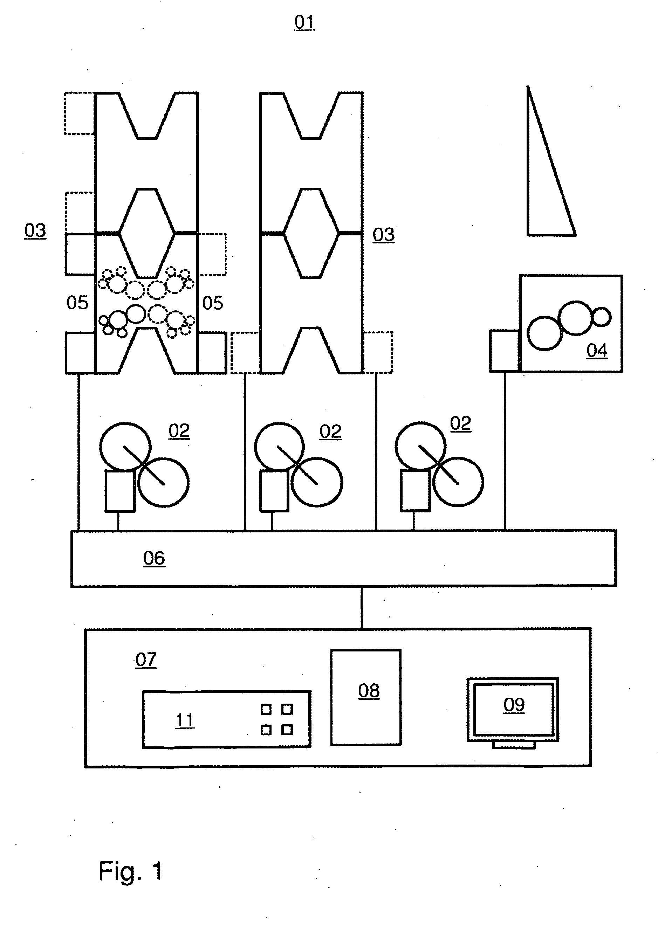

Eine Anlage 01, beispielsweise wie in Fig. 1 dargestellt eine Druckmaschine 01 oder Druckmaschinenanlage 01, weist eine Anzahl von Aggregaten 02; 03; 04, beispielsweise Anlagenteile zur Ausführung bestimmter Verfahrensschritte, wie Materialzuführung 02 (z. B. ein Rollenwechsler 02 oder mehrere Rollenwechsler 02.1; 02.2; 02.3 etc.), Druckeinheiten bzw. -türme 03, Aggregate zur Weiterverarbeitung 04, wie Falzapparate 04 etc., auf. Die Druckeinheiten 03 können wiederum mehrere untergeordnete Aggregate 05, z. B. Druckwerke 05, z. B. bezeichnet mit 05.1; 05.2; 05.3; 05.4 etc., aufweisen. Die verschiedenen Aggregate 02; 03; 04; 05 können jeweils einmal oder mehrmals in der Anlage vorgesehen sein. Für verschiedene Ausführungen der Anlage können Anzahl und/oder Ausprägung der Aggregate 02; 03; 04; 05 unterschiedlich sein.

Durch die Druckmaschine werden eine oder mehrere Bahnen ein oder mehrfarbig bedruckt. Hierzu weisen die Druckwerke 05 in Querrichtung zur Bahn Farbbereiche auf, welche z.B. der Anzahl der nebeneinander anzuordnenden Druckformen/Druckseiten entsprechen. Jeder Farbbereich weist wiederum z.B. nebeneinander eine oder mehrere Farbzonen und nicht dargestellten Stelleinrichtungen auf. Die Stelleinrichtungen sind in üblicher Weise, z. B. mittels stellbarer Farbmesser, ausgeführt. Es sind jedoch je nach Ausführung des Farbwerkes auch andere Stelleinrichtungen möglich.

Des weiteren weist die Anlage 01 ein symbolisch dargestelltes Steuerungssystem 06 auf, welches einerseits die Kommunikation zu den Aggregaten 02; 03; 04; 05, bzw. deren Antriebe, Einstellungen bzw., für sich und im Zusammenspiel zueinander steuert. Auf der anderen Seite ist zwischen dem Steuersystem 06 und einem Leitstand 07 eine Kommunikation möglich, durch welche eine Visualisierung von z. B. aktuellen Einstellungen und/oder Messwerten zum Leitstand 07 erfolgen kann. In umgekehrter Richtung sind am Leitstand 07 Einstellwerte für die Aggregate betreffende Parameter, z.B. Einstellwerte für die o.g. Stelleinrichtungen der Farbzonen, vorgeb- bzw. veränderbar.

Der Leitstand 07 weist im Beispiel zumindest eine Rechen- bzw. Datenverarbeitungseinheit 08 (Leitstandsrechner 08), eine Visualisierung 09 (Bildschirm 09) sowie eine Bedienpult 11 auf. Der Leitstand 07 dient der Kommunikation des Bedienpersonals mit der Anlage 01 oder einer Sektion der Anlage 01.

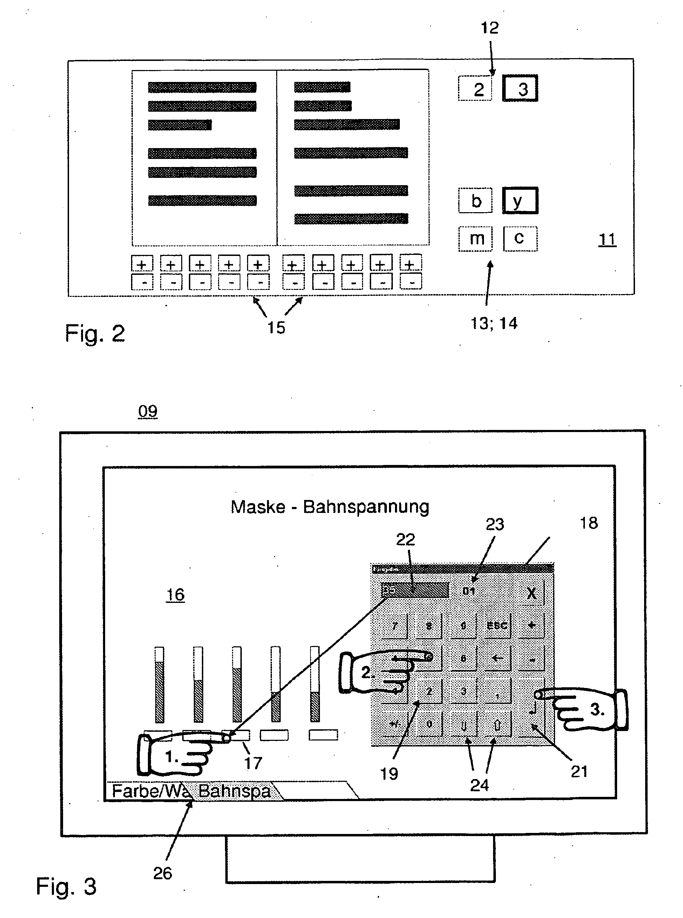

Das Bedienpult 11 (Fig. 2) weist einen Ablagebereich auf, auf welchem ein mit der Anlage 01 hergestelltes Produkt aufgelegt und seitenweise im Hinblick auf Umfangs-, Farb- und/oder Seitenregister (Längs-, Quer-, Schnittregister) und/oder Passer und/oder Farbedichte/Farbechtheit vom Bedienpersonal kontrolliert werden kann.

Der Leitstand 07 kann grundsätzlich für maschinenorientierte Bedienung oder für produktorientierte Bedienung ausgeführt sein. Vorteilhaft wie im Beispiel gezeigt, ist der Leitstand 07 für eine produktorientierte Bedienung ausgeführt. D. h. eine Änderung z.B. einer Farbeinstellung auf einer bestimmten Druckseite wird nicht vom Bedienpersonal an einem von diesem direkt anzuwählenden Druckwerk verändert, sondern direkt auf der anzuwählenden Seite des Produktes. Der Drucker muss hierfür nicht wissen, in welchem Druckwerk an welcher axialen Position welche Farbe dieser Seite bedruckt wurde. Die Anwahl kann direkt über Eingabe, z.B. der Seitenzahl, am Bedienpult 11 oder aber unterstützt durch eine Bilderkennung, z. B. eine Kamera mit entsprechender Softwareauswertung, erfolgen.

Zusätzlich zu einer Anwahl und/oder einer Anzeige 12 der gerade aktiven Seite (manuell oder per Bilderkennung) weist das Bedienpult 11 Mittel zur Anzeige 13 (Visualisierung) und/oder Anwahlmittel 14 einer zu stellenden Farbe auf. Das heißt, von der Druckmaschine bzw. dem Leitstandsrechner 08 erfolgt eine Rückkopplung zum Bedienpult hin, welche Farben überhaupt für die gewählte Seite in Frage kommen und daher änderbar sind. Aus prinzipiell n (z. B. n = 6) möglichen Farben werden dann m (m ≤ n) Farben automatisch gekennzeichnet und dem Bediener somit angezeigt. Diese Visualisierung auf dem Bedienpult 11 kann anstelle oder zusätzlich zur Visualisierung am Bildschirm 09 vorgesehen sein. Auf dem Bedienpult 11 erfolgt nun eine Anzeige 12 der gerade aktiven Seite(n) und der Ablageort auf dem Bedienpult 11. Dies kann in der schematisch in Fig. 2 angedeuteten Weise durch zwei nebeneinander angeordnete Felder erfolgen, von welchen das Feld mit der aktiven Seite kenntlich gemacht ist, oder in einer anderen geeigneten Weise. Gleichzeitig mit der Anzeige der aktiven Seite werden anhand der Mittel zur Anzeige 13 (Visualisierung), z. B. in weiteren Feldern 13, sämtliche Farben dieser Seite angezeigt. D.h. es wird dem Bedienpersonal die Information darüber gegeben, welche Farben die betreffende Seite aufweist und infolge dessen stellbar sind. Dies kann in der schematisch in Fig. 2 angedeuteten Weise durch mehrere Felder 13, allgemein Anzeigeelemente 13, erfolgen. Die gerade aktivierte Farbe kann zusätzlich kenntlich gemacht sein. Die Mittel zur Anzeige 13 der Farben und entsprechende Anwahlmittel 14 können voneinander verschieden sein oder aber in einer entsprechend ausgeführten Taste mit Leucht- und/oder Displayfunktion vereint sein. Vorteilhaft sind n (z. B. n = 6) Tasten mit Leucht- und/oder Displayfunktion als Anzeigeelemente 13 vorgesehen, von welchen m Tasten zur Kennzeichnung der Verfügbarkeit der Farbe auf der betreffenden Seite leuchten. Die für die Tasten 15 aktivierte Farbe blinkt und ist durch Drücken einer anderen leuchtenden Taste wechselbar.

Sind durch das Bedienpersonal Korrekturen auf bestimmten Seiten, z. B. Seite 2 und 3 des fertigen Produktes, durchzuführen, so wählt das Bedienpersonal mittels nicht dargestellter Mittel am Bedienpult 11 die entsprechende Seite an (oder schlägt sie auf und erhält diese über die o.g. Bilderkennung). Im Bereich der Anzeige 13 erhält das Bedienpersonal die Information darüber, welche Farben (z. B. b = black, y = yellow, m = magenta, c = cyan) diese Seite beinhaltet. Es leuchten dann z.B. die betreffenden Felder 13 auf. Soll eine Farbe, z. B. gelb y, korrigiert werden, so wird mit dem entsprechenden Feld 13 (oder der nicht dargestellten gesonderten Anwahlmöglichkeit 14) diese Farbe ausgewählt, um anschließend über ein Array von Tasten 15 über "+" und "-" die Farbe in den Farbzonen einzustellen. Die Taste 13 der ausgewählten Farbe blinkt dann beispielsweise.

Die Information über die Farbbelegung zur jeweiligen Seitenbelegung erhält das Bedienpult 11 über den Leitstandsrechner 08. In umgekehrter Weise enthält der Leitstandrechner die Zuordnung der Seiten zu den betroffenen Druckwerken und Farbzonenstellantrieben.

Beim Überprüfen der Druckseiten auf dem Bedienpult 11 kann es vorteilhaft vorgesehen sein, dass nach Aktivierung der Farbüberprüfung für eine bestimmte Druckseite alle anwählbaren Farben dieser Seite gekennzeichnet sind und, wenn vorhanden, immer zunächst mit 'Schwarz' begonnen wird. Das System springt nach Auswahl dieser Seite also zunächst auf den Änderungsmodus für 'Schwarz', so dass die Tasten 15 auf die Stellmittel des entsprechenden Druckwerkes wirken. Das Anzeigeelement 13 für 'Schwarz' blinkt. Das Bedienpersonal kann nun über die Tasten 15 'Schwarz' korrigieren oder aber eine andere Farbe anwählen, welche es dann ändern möchte. Auch für die weiteren Farben kann ein Zyklus vorgegeben sein, welcher die Farben (jedoch lediglich die auf der Seite vorhandenen) nach einer vorgebbaren und/oder vorgegebenen Reihenfolge abarbeitet.

In einer vorteilhaften Ausführung (Fig. 3) ist der Bildschirm 09 zur Visualisierung und Eingabe ausgeführt. Er weist vorzugsweise ein Anzeigefeld 16 mit mindestens einem aktivierbaren, insbesondere berührungssensitiven Bereich 17 auf. In diesem Anzeigefeld 16 werden z.B. für die aktuelle Einstellung wesentliche Parameter, Ist-Werte und/oder Soll-Werte eingeblendet. Dies können beispielsweise Vorgabewerte und/oder Istwerte für Register, für Bahnspannung etc. sein. Im berührungssensitiven Bereich 17, z.B. dem Parameterfeld 17 sind aktuell angezeigte Werte angezeigt und veränderbar. Wird dieses Parameterfeld 17 berührt (1.), so öffnet sich auf dem Anzeigefeld 16 ein beispielsweise ein Eingabefenster bzw. Eingabefeld 18 mit numerischen Tasten 19 und einer Übernahmetaste 21 zur Übernahme der gewählten Werte (und ggf. zusätzlichen Funktionen).

Die Werte sind in einer ersten Weise wählbar, indem über die numerischen Tasten 19 der gewünschte Wert eingegeben (2.), und ggf. in einem Display 22 angezeigt, und anschließend durch die Übernahmetaste 21 (3.) in das Parameterfeld 17 übernommen wird. In vorteilhafter Weiterbildung können alternativ oder auch zusätzlich zur reinen Werteeingabe können z. B. auch Inkremente bzw. Dekremente 23 vorgegeben sein, wobei der im Display 22 aktuell angezeigte Wert durch die Felder ⇑ und ⇓ 24 (oder " + " und " - ") in den Schritten des angezeigten Dekrements 23 nach oben oder unten veränderbar sind. Auch der Schritt des Dekrements 23 ist von einem vordefinierten Wert in einen gewünschten Wert veränderbar, indem beispielsweise über die numerischen Tasten die Ziffern gewählt und anschließend mit den Feldern 24 der im Display angezeigte Wert verändert wird, bevor letzterer in das Parameterfeld 17 übernommen wird. In vorteilhafter Weiterbildung weist das Anzeigefeld 16 aktivierbare Felder bzw. Tasten 26 auf, mittels derer die gerade auf dem Anzeigefeld 16 aktive Maske wählbar ist. So kann beispielsweise wie in Fig. 3 beispielhaft gezeigt, eine Maske mit relevanten Informationen und Parameterfeldern 17 zur Bahnspannung aktiviert sein. In einem anderen Fall können Informationen und Parameterfelder 17 zur Farbe und Feuchtwasser aktiviert sein.

Das Anzeigefeld 16 des Bildschirmes 09 ist zumindest im Bereich der jeweils änderbaren Parameterfelder 17 sowie im Bereich des sich öffnenden Fensters 18 (bzw. dessen Tasten 19; 21; 24) und falls vorhanden im Bereich der Felder 26 berührungssensitiv ausgeführt sein. In vorteilhafter Ausführung ist das gesamte Anzeigefeld 16 des Bildschirms 09 berührungssensitiv ausgeführt und kommuniziert über eine entsprechende Software mit einer ihm zugeordneten Rechen- und/oder Datenverarbeitungseinheit, z.B. mit dem Leitstandsrechner 08.

In einer einfacheren Ausführung - wobei jedoch ebenfalls die Vorteile im Hinblick auf ein übersichtliches Anzeigefeld zum Tragen kommen - erfolgt die Bedienung nicht per Berührung des Bediener, sondern über einen Zeiger oder Cursor, welcher mittels einer Navigiervorrichtung, z.B. einer Computermaus, einem Trackball, über entsprechende Tasten oder in anderer geeigneter Weise über das Anzeigefeld 16 bewegbar ist und eine Bestätigungstaste aufweist um über das angefahrene Parameterfeld 17 das Eingabefeld 18 zu aktivieren.

Bezugszeichenliste
- 01: Anlage, Druckmaschine, Druckmaschinenanlage
- 02: Aggregat, Materialzuführung, Rollenwechsler
- 02.1: Rollenwechsler
- 02.2: Rollenwechsler
- 02.3: Rollenwechsler
- 03: Aggregat, Druckeinheit, Druckturm
- 04: Aggregat zur Weiterverarbeitung, Falzapparat
- 05: Aggregat, Druckwerk
- 06: Steuerungssystem
- 07: Leitstand
- 08: Rechen- bzw. Datenverarbeitungseinheit, Leitstandsrechner
- 09: Visualisierung, Bildschirm
- 10: -
- 11: Bedienpult
- 12: Anzeige, Seite
- 13: Anzeige, Anzeigeelement, Farbe, Felder, Taste
- 14: Anwahlmittel
- 15: Tasten
- 16: Anzeigefeld
- 17: Bereich, Parameterfeld
- 18: Eingabefenster, Eingabefeld
- 19: Taste, numerisch
- 20: -
- 21: Übernahmetaste
- 22: Display
- 23: Inkremente bzw. Dekremente
- 24: Feld, Taste
- 25: -
- 26: Feld, Taste

## Patentansprüche

1. Vorrichtung zum Bedienen einer Druckmaschine (01) mit einem Bedienpult (11), wobei das Bedienpult (11) einen Ablagebereich aufweist, auf welchem ein mit der Druckmaschine (01) hergestelltes Produkt aufgelegt und seitenweise im Hinblick auf Umfangs-, Seiten-, Farbregister und/oder Farbe vom Bedienpersonal kontrolliert werden kann, **dadurch gekennzeichnet, dass** das Bedienpult (11) zusätzlich zu einer Anwahl und/oder einer Anzeige (12) der gerade aktiven Seite Mittel zur Anzeige (13) aufweist, durch die aus einer Gesamtheit von möglichen Farben lediglich alle der gerade aufliegenden und aktiven Seite zugeordneten Farben angezeigt werden.

2. Vorrichtung nach Anspruch 1, **dadurch gekennzeichnet, dass** das Bedienpult Mittel zur Anwahl (14) einer der am Bedienpult (11) für die aktive Seite angezeigten, zu stellenden Farben aufweist.

3. Vorrichtung nach Anspruch 2, **dadurch gekennzeichnet, dass** die Mittel zur Anzeige (13) der Farben und die entsprechenden Anwahlmittel (14) in einer entsprechend ausgeführten Taste mit Leucht- und/oder Displayfunktion vereint sind.

4. Vorrichtung nach Anspruch 2, **dadurch gekennzeichnet, dass** lediglich die angezeigten Farben einzeln durch Mittel zur Anwahl (14) anwählbar und infolge dessen über Tasten (15) im Hinblick auf die Farbmenge einstellbar sind.

5. Vorrichtung nach Anspruch 1, **dadurch gekennzeichnet, dass** eine Anzahl von n Anzeigeelementen (13) für die maximal vorzusehenden Farben vorgesehen sind, wovon lediglich m Anzeigeelemente (13) in der Weise aktiviert sind, dass sie dem Bedienpersonal das Vorhandensein auf der Druckseite kenntlich machen, wobei m ≤ n ist.

## Claims

1. An apparatus for operating a printing press (01) with an operating desk (11), wherein the operating desk (11) has a deposition area on which a product produced by the printing press (01) can be placed and can be monitored page-wise by the operating staff with respect to the peripheral, lateral and colour register and/or the colour, **characterized in that,** in addition to a selection and/or a display (12) of the page just active, the operating desk (11) has display means (13) by which, of a totality of possible colours, only all the colours associated with the page just positioned and active are indicated.

2. An apparatus according to Claim 1, **characterized in that** the operating desk has selecting means (14) for one of the colours to be set which is displayed on the operating desk (11) for the active page.

3. An apparatus according to Claim 2, **characterized in that** the display means (13) for the colours and the corresponding selecting means (14) are joined in a suitably designed button with a luminous and/or display function.

4. An apparatus according to Claim 2, **characterized in that** only the colours indicated are capable of being set individually with respect to the quantity of ink by selecting means (14) in a selectable manner and, as a result, by way of buttons (15).

5. An apparatus according to Claim 1, **characterized in that** a number of n display elements (13) are provided for the maximum colours to be provided, of which only m display elements (13) are activated in such a way that they make the presence on the printed page known to the operating staff, in which m ≤ n.

## Revendications

1. Dispositif de contrôle d'une machine à imprimer (01) équipée d'un pupitre de commande (11), le pupitre de commande (11) présentant une zone formant déposoir, sur laquelle un produit, fabriqué avec la machine à imprimer (01), est posé et peut-être contrôlé par le personnel de contrôle, page par page, eu égard au repérage périphérique, de pages et de couleurs et/ou eu égard à la couleur, **caractérisé en ce que** le pupitre de commande (11) présente, en plus d'une sélection et/ou d'un affichage (12) de la page justement active, des moyens d'affichage (13), au moyen desquels, à partir d'un ensemble de couleurs possibles, seule la totalité des couleurs justement en application et associées à la page active sont affichées.

2. Dispositif selon la revendication 1, **caractérisé en ce que** le pupitre de commande comprend des moyens de sélection (14) d'une des couleurs à appliquer, affichées sur le pupitre de commande (11) pour la page active.

3. Dispositif selon la revendication 2, **caractérisé en ce que** les moyens d'affichage (13) des couleurs et les moyens de sélection (14) correspondants sont réunis en une touche de réalisation correspondante, ayant une fonction d'éclairage et/ou d'affichage.

4. Dispositif selon la revendication 2, **caractérisé en ce que** seules les couleurs affichées sont sélectionnables individuellement par des moyens de sélection (14) et son réglables, suite à cela, eu égard à la quantité d'encre, par des touches (15).

5. Dispositif selon la revendication 1, **caractérisé en ce qu'**un nombre de n éléments d'affichage (13) pour les couleurs à prévoir au maximum sont prévus, dont seulement m éléments d'affichage (13) sont activés, de manière qu'ils rendent identifiables au personnel de contrôle la présence sur la page d'impression, alors que m ≤ n.
